# FASCICULE DE BREVET EUROPEEN

(11) **EP 0 902 301 B1**
(45) Date de publication et mention de la délivrance du brevet: **09.07.2003**
(21) Numéro de dépôt: 98402183.2
(22) Date de dépôt: 03.09.1998
(51) Int. Cl.: G01S 7/48, G02B 23/12

(54) **Dispositif d'observation opto-électronique perfectionné pour détecter les tirs laser**
Opto-elektronische Beobachtungsvorrichtung mit verbesserter Detektion von Laserschüssen
Optoelectronic observation apparatus improved to detect laser shots

(30) Priorité: 09.09.1997 FR 9711157
(43) Date de publication de la demande: 17.03.1999
(73) Titulaire: AEROSPATIALE MATRA, 75016 Paris (FR)
(72) Inventeur: Adda, Maurice, 92160 Antony (FR)
(74) Mandataire: Bonnetat, Christian

(56) Documents cités:
- EP-A- 0 654 941
- US-A- 4 575 752
- US-A- 4 894 721
- US-A- 5 153 425

## Description

La présente invention concerne les dispositifs d'observation pourvus d'un système optique pour l'observation d'un champ, d'un détecteur optoélectronique associé audit système optique pour former l'image électronique dudit champ et de moyens vidéo recevant ladite image électronique et affichant l'image vidéo correspondante dudit champ.

On sait que de tels dispositifs d'observation peuvent être endommagés ou même détruits par des faisceaux laser dirigés contre eux.

Aussi, le brevet US-A-5 153 425 décrit un dispositif de protection contre de telles agressions laser, grâce auquel les faisceaux laser atteignant un tel dispositif d'observation sont automatiquement réfléchis et absorbés sans pouvoir endommager ou détruire ce dernier, sans même que l'observateur regardant l'image vidéo du champ en ait connaissance.

La présente invention a pour objet de perfectionner un dispositif d'observation du type rappelé ci-dessus et protégé par le dispositif de protection précité, afin d'alerter ledit observateur sur le fait qu'un faisceau laser a atteint ledit dispositif d'observation.

A cette fin, selon l'invention, le dispositif d'observation comprenant :
- un système optique pour l'observation d'un champ dans lequel sont susceptibles de se produire des tirs laser ;
- un détecteur optoélectronique associé audit système optique pour former une suite d'images électroniques dudit champ ;
- des moyens d'affichage vidéo recevant lesdites images électroniques et affichant les images vidéo dudit champ correspondantes ; et
- un dispositif de protection réfléchissant et absorbant les faisceaux laser atteignant ledit dispositif d'observation,
est remarquable en ce qu'il comporte :
- des moyens de mémoire susceptibles de stocker au moins deux images électroniques successives dudit champ ;
- des moyens de soustraction permettant de soustraire l'une desdites images électroniques de l'autre pour en obtenir la différence ; et
- des moyens de commande vidéo permettant de superposer ladite différence auxdites images vidéo affichées par lesdits moyens d'affichage vidéo, au moins dans le cas où un tir laser a atteint ledit dispositif d'observation.

Ainsi, lorsqu'aucun tir laser ne se produit, les deux images électroniques successives sont identiques, de sorte que leur différence est nulle et rien n'est superposé aux images vidéo apparaissant sur lesdits moyens vidéo. En revanche, lorsqu'un tir laser atteint le dispositif d'observation, le dispositif de protection réfléchit et absorbe le faisceau laser correspondant, de sorte que, sur l'élément optoélectronique sensible dudit détecteur, le ou les pixels correspondant à l'emplacement où ledit faisceau laser a frappé sont obscurcis. Par suite, la différence entre lesdites images successives n'est plus nulle, mais au contraire formée par ledit ou lesdits pixels obscurcis. Ceux-ci étant superposés aux images vidéo affichées, ils indiquent sur celles-ci l'endroit d'où est parti ledit tir laser, puisque, à travers ledit système optique, l'origine du tir laser, le centre du système optique et lesdits pixels obscurcis sont alignés.

Ainsi, en observant lesdits moyens d'affichage vidéo, l'observateur est alerté (par l'apparition du ou des pixels obscurcis) qu'un tir laser est dirigé contre lui et il connaît l'origine de ce tir laser.

Avantageusement, afin d'attirer clairement l'attention dudit observateur, lesdits moyens de commande vidéo accentuent le ou les pixels obscurcis pour les faire apparaître sans ambiguïté sur lesdits moyens d'affichage vidéo.

Pour accentuer le ou les pixels obscurcis, lesdits moyens de commande vidéo peuvent, sur lesdits moyens d'affichage vidéo, grossir ces pixels obscurcis ou afficher une marque particulière centrée sur lesdits pixels, telle qu'un cercle, un réticule, etc ...

De plus, pour attirer encore plus l'attention de l'observateur et lui permettre d'analyser rapidement la situation, lesdits moyens de commande vidéo peuvent rendre fixe l'image affichée sur lesdits moyens d'affichage vidéo, lorsque ladite différence est représentative d'un tir laser.

Lesdits moyens de commande vidéo peuvent également commander des moyens de mémoire supplémentaires pour stocker, dans le cas où un tir laser atteint ledit dispositif d'observation, l'image résultant de la superposition de ladite différence et d'une desdites images vidéo affichée correspondantes.

Ainsi, le stockage de cette image permet l'analyse ultérieure du champ observé et/ou la commande d'une riposte immédiate au tir laser ayant atteint ledit dispositif d'observation.

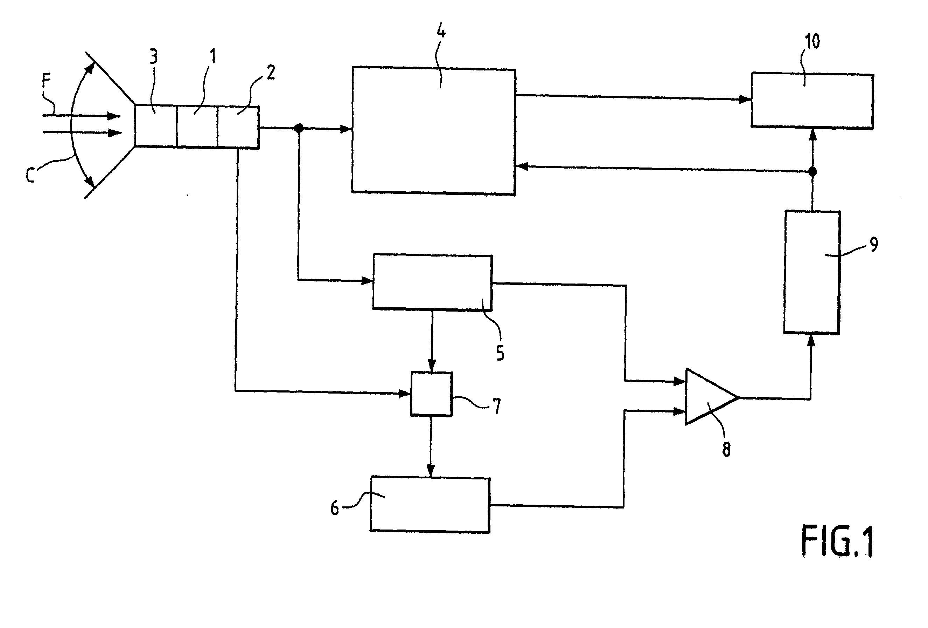

Les figures du dessin annexé feront bien comprendre comment l'invention peut être réalisée. Sur ces figures, des références identiques désignent des éléments semblables. La figure 1 montre le schéma synoptique d'un dispositif d'observation optoélectronique perfectionné conformément à la présente invention.

Les figures 2A, 2B et 2C illustrent le fonctionnement du dispositif d'observation optoélectronique de la figure 1, lorsqu'aucun tir laser n'atteint ledit dispositif.

Les figures 3A, 3B, 3C et 3D illustrent le fonctionnement du dispositif d'observation optoélectronique de la figure 1, lorsqu'un tir laser atteint ledit dispositif.

Le dispositif d'observation, illustré schématiquement sur la figure 1, comporte un système optique 1 observant un champ optique C duquel il reçoit des faisceaux lumineux F. Le système optique 1 est associé à un détecteur optoélectronique 2, qui forme une image électronique dudit champ, et est protégé contre les tirs lasers par un dispositif de protection 3 . Ce dispositif de protection 3 laisse passer tous les rayons lumineux, à l'exception des faisceaux laser qu'il réfléchit et absorbe. L'image électronique engendrée par le détecteur optoélectronique 2 est transmise à des moyens vidéo 4 qui affichent l'image vidéo correspondante du champ C observé par le système optique 1.

Le dispositif d'observation de la figure 1 comporte de plus deux mémoires électroniques 5 et 6 et un dispositif de transfert d'images 7, synchronisé avec le séquencement desdites images dans le détecteur optoélectronique 2. De plus, l'entrée de la mémoire électronique 5 est reliée à la sortie du détecteur optoélectronique 2, en parallèle avec les moyens vidéo 4.

Ainsi, à un instant t, l'image électronique It apparaissant à la sortie du détecteur optoélectronique 2 est, simultanément, affichée sur les moyens vidéo 4 et enregistrée dans la mémoire 5. A l'instant suivant t+dt du séquencement d'images, l'image électronique précédente It est transférée dans la mémoire 6 par le dispositif de transfert 7, tandis que l'image électronique actuelle It+dt est, simultanément, affichée sur les moyens. vidéo 4 et stockée dans la mémoire 5. De même, à l'instant suivant t+2dt du séquencement d'images, l'image électronique précédente It+dt est transférée dans la mémoire 6 par le dispositif de transfert 7, tandis que l'image électronique actuelle It+2dt est, simultanément, affichée sur les moyens vidéo et stockée dans la mémoire 5, etc ... Ainsi, à chaque instant du séquencement d'images, la mémoire 5 contient l'image actuelle du champ C, tandis que la mémoire 6 contient l'image précédente dudit champ.

Les sorties des mémoires 5 et 6 sont respectivement. reliées à deux entrées d'un soustracteur 8, dont la sortie est reliée aux moyens vidéo 4 par des moyens de superposition 9.

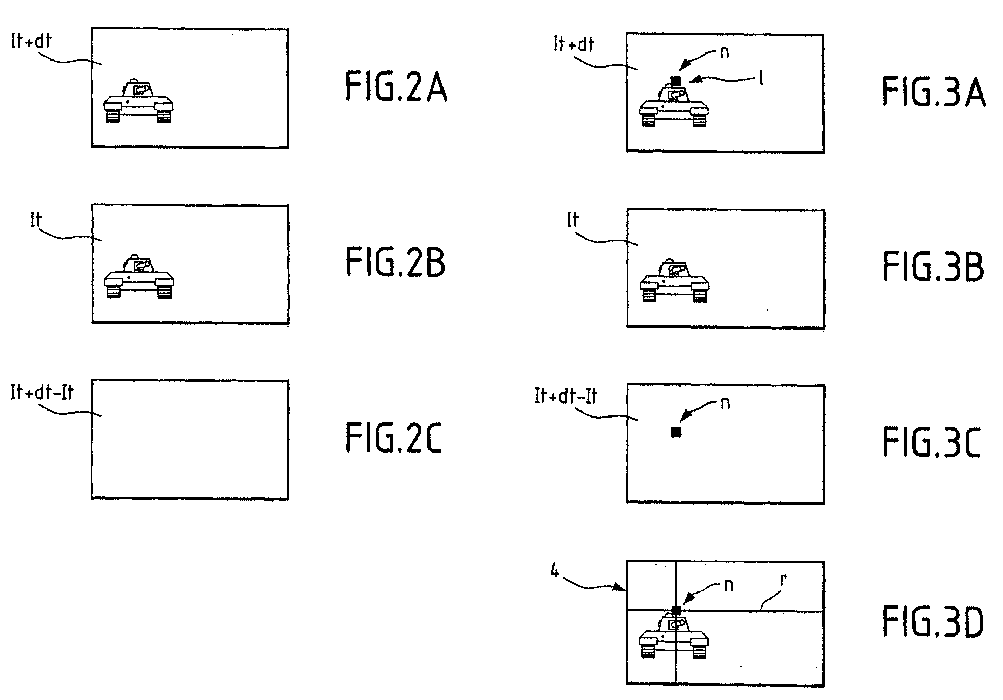

Ainsi, comme l'illustrent les figures 2A et 2B, si les deux images électroniques It et It+dt sont identiques, leur différence It+dt - It (figure 2C) apparaissant à la sortie du soustracteur 8 est nulle et les moyens de superposition 9 n'ont rien à superposer à l'image vidéo affichée par les moyens vidéo 4.

En revanche, si à l'instant t+dt un tir laser 1, correspondant à la bande de fonctionnement du détecteur 2 et dont l'énergie est telle qu'il peut être réfléchi et/ou absorbé par le dispositif de protection 3, atteint ledit dispositif d'observation, l'image électronique correspondante It+dt comporte au moins un pixel obscurci n (voir la figure 3A). Par suite, si à l'instant précédent (voir la figure 3B), il n'y a eu aucun tir laser, la différence entre les images It+dt - It (voir la figure 3C) est constituée desdits pixels obscurcis, qui sont superposés, sur les moyens d'affichage vidéo 4, à l'image vidéo en cours d'affichage par les moyens de commande vidéo 9. De plus, ces derniers peuvent rendre fixe ladite image vidéo et/ou lui superposer un réticule r centré sur ledit pixel obscurci (voir la figure 3D).

L'observateur regardant lesdits moyens d'affichage vidéo 4 est donc alerté du tir laser dirigé contre le dispositif d'observation et il peut déterminer l'origine de ce tir laser.

Le dispositif conforme à la présente invention peut comporter une mémoire supplémentaire 10 dans laquelle est stockée, sous la commande desdits moyens de commande vidéo 9, l'image du champ C avec le réticule r superposé, comme montré sur la figure 3D.

## Revendications

1. Dispositif d'observation comprenant :
- un système optique (1) pour l'observation d'un champ (C) dans lequel sont susceptibles de se produire des tirs laser ;
- un détecteur optoélectronique (2) associé audit système optique pour former une suite d'images électroniques dudit champ ;
- des moyens d'affichage vidéo (4) recevant lesdites images électroniques et affichant les images vidéo dudit champ correspondantes ; et
- un dispositif de protection (3) réfléchissant et absorbant les faisceaux laser atteignant ledit dispositif d'observation,
**caractérisé en ce qu'**il comporte de plus :
- des moyens de mémoire (5, 6) susceptibles de stocker au moins deux images électroniques successives dudit champ (C) ;
- des moyens de soustraction (8) permettant de soustraire l'une desdites images électroniques de l'autre pour en obtenir la différence ; et
- des moyens de commande vidéo (9) permettant de. superposer ladite différence auxdites images vidéo affichées par lesdits moyens d'affichage vidéo (4), au moins dans le cas où un tir laser a atteint ledit dispositif d'observation.

2. Dispositif d'observation selon la revendication 1,
**caractérisé en ce que**, dans le cas où un tir laser a atteint ledit dispositif d'observation, ladite différence est formée d'au moins un pixel d'image obscurci (n) et **en ce que** lesdits moyens de commande vidéo (9) accentuent ledit pixel obscurci pour qu'il apparaisse clairement sur lesdits moyens d'affichage vidéo (4).

3. Dispositif d'observation selon la revendication 2,
**caractérisé en ce que**, pour accentuer ledit pixel obscurci (n), lesdits moyens de commande vidéo (9) affichent, sur lesdits moyens d'affichage vidéo (4), une marque (r) centrée sur ledit pixel obscurci.

4. Dispositif d'observation selon la revendication 3,
**caractérisé en ce que** ladite marque est un réticule (r).

5. Dispositif d'observation selon l'une des revendications 1 à 4,
**caractérisé en ce que** lesdits moyens de commande vidéo (9) rendent fixe l'image affichée sur lesdits moyens d'affichage vidéo, lorsque ladite différence est représentative d'un tir laser.

6. Dispositif d'observation selon l'une des revendications 1 à 5,
**caractérisé en ce qu'**il comporte des moyens de mémoire supplémentaires (10) pour stocker, dans le cas où un tir laser a atteint le dispositif d'observation, l'image résultant de la superposition de ladite différence-et d'une desdites images vidéo affichée correspondantes.

## Patentansprüche

1. Beobachtungsvorrichtung, die folgendes umfasst:
- ein optisches System (1) zur Beobachtung eines Felds (C), in dem es zu Laserschüssen kommen kann;
- einen dem genannten optischen System zur Bildung einer Folge von elektronischen Bildem des genannten Felds zugeordneten opto-elektronischen Detektor (2);
- Videoanzeigemittel (4), die die genannten elektronischen Bilder empfangen und die entsprechenden Videobilder des genannten Felds anzeigen; und
- eine Schutzvorrichtung (3), die die Laserstrahtenbündel, die auf die genannte Beobachtungsvorrichtung treffen, reflektieren und absorbieren,
**dadurch gekennzeichnet, dass** sie weiterhin folgendes umfasst:
- Speichermittel (5, 6), die mindestens zwei aufeinanderfolgende elektronische Bilder des genannten Felds ( C) speichern können;
- Subtraktionsmittel (8), die es ermöglichen, eines der genannten elektronischen Bilder zum Erhalt der Differenz von beiden vom anderen zu subtrahieren; und
- Videosteuermittel (9), die es ermöglichen, die genannte Differenz über die genannten, von den genannten Videoanzeigemitteln (4) angezeigten Bilder zumindest dann zu legen, wenn ein Laserschuss die genannte Beobachtungsvorrichtung getroffen hat.

2. Beobachtungsvorrichtung gemäß Anspruch 1,
**dadurch gekennzeichnet, dass** die genannte Differenz, wenn ein Laserschuss die genannte Beobachtungsvorrichtung getroffen hat, von mindestens einem abgedunkelten Bildpixel (n) gebildet wird und dass die genannten videosteuermittel (9) das genannte abgedunkelte Pixel verstärken, damit es deutlich auf den genannten Videoanzeigemitteln (4) erscheint.

3. Beobachtungsvorrichtung gemäß Anspruch 2,
**dadurch gekennzeichnet, dass** die genannten Videosteuermittel (9) zur Verstärkung des genannten abgedunkelten Pixels (n) auf den genannten Videoanzeigemitteln (4) eine Marke (r) anzeigen, die auf den genannten abgedunkelten Pixel zentriert ist.

4. Beobachtungsvorrichtung gemäß Anspruch 3,
**dadurch gekennzeichnet, dass** die genannte Marke ein Strichkreuz (r) ist.

5. Beobachtungsvorrichtung gemäß einem der Ansprüche 1 bis 4,
**dadurch gekennzeichnet, dass** die genannten Videosteuermittel (9) das auf den genannten Videoanzeigemitteln angezeigte Bild fixieren, wenn die genannte Differenz repräsentativ für einen Laserschuss ist.

6. Beobachtungsvorrichtung gemäß einem der Ansprüche 1 bis 5,
**dadurch gekennzeichnet, dass** sie zusätzliche Speichermittel (10) umfasst, um für den Fall, dass ein Laserschuss die Beobachtungsvorrichtung getroffen hat, das sich aus dem Übereinandedegen der genannten Differenz und eines der genannten entsprechenden angezeigten Videobilder ergebende Bild zu speichem.

## Claims

1. Observation device comprising:
- an optical system (1) for observing a field (C) in which laser shots are able to occur;
- an optoelectronic detector (2) associated with the said optical system for forming a set of electronic images of the said field;
- video display means (4) receiving the said electronic images and displaying the corresponding video images of the said field; and
- a protection device (3) reflecting and absorbing the laser beams reaching the said observation device,
**characterized in that** it moreover comprises:
- memory means (5, 6) able to store at least two successive electronic images of the said field (C);
- subtraction means (8) making it possible to subtract one of the said electronic images from the other so as to obtain the difference between them; and
- video control means (9) making it possible to superimpose the said difference on the said video images displayed by the said video display means (4), at least in the case where a laser shot has reached the said observation device.

2. Observation device according to Claim 1,
**characterized in that**, in the case where a laser shot has reached the said observation device, the said difference is formed of at least one darkened image pixel (n) and **in that** the said video control means (9) accentuate the said darkened pixel so that it appears clearly on the said video display means (4).

3. Observation device according to Claim 2,
**characterized in that**, in order to accentuate the said darkened pixel (n), the said video control means (9) display, on the said video display means (4), a mark (r) centred on the said darkened pixel.

4. Observation device according to Claim 3,
**characterized in that** the said mark is a reticle (r).

5. Observation device according to one of Claims 1 to 4,
**characterized in that** the image displayed on the said video display means is rendered stationary by the video control means (9) when the said difference is representative of a laser shot.

6. Observation device according to one of Claims 1 to 5,
**characterized in that** it comprises additional memory means (10) for storing, in the case where a laser shot has reached the observation device, the image resulting from the superimposing of the said difference and of one of the said corresponding video images displayed.
